# FASCICULE DE BREVET EUROPEEN

(11) **EP 3 612 769 B1**
(45) Date de publication et mention de la délivrance du brevet: **24.03.2021**
(21) Numéro de dépôt: 18720327.8
(22) Date de dépôt: 12.04.2018
(51) Int. Cl.: F24D 3/08, F24D 3/18, F24D 17/02, F04B 35/00, F25B 7/00, F24H 9/00

(54) **CHAUDIÈRE THERMODYNAMIQUE À CO2 ET COMPRESSEUR THERMIQUE**
THERMODYNAMISCHER CO2-KESSEL UND THERMISCHER KOMPRESSOR
THERMODYNAMIC CO2 BOILER AND THERMAL COMPRESSOR

(30) Priorité: 20.04.2017 FR 1753447
(43) Date de publication de la demande: 26.02.2020
(73) Titulaire: Boostheat, 69200 Vénissieux (FR)
(72) Inventeur: JOFFROY, Jean-Marc, 81500 Cabanes (FR)
(74) Mandataire: Plasseraud IP
(86) Numéro de dépôt international: PCT/FR2018/050925
(87) Numéro de publication internationale: WO 2018/193188

(56) Documents cités:
- WO-A1-2014/174199
- WO-A1-2014/202885

## Description

La présente invention est relative aux systèmes de chauffage qui incluent des dispositifs appelés chaudières. On s'intéresse en particulier aux chaudières thermodynamiques tirant parti d'un dispositif dit de pompe à chaleur (dit 'PAC' en abrégé). Le document WO 2014/174199 A1 divulgue un système de chauffage ayant les caractéristiques du préambule de la revendication 1.

### Contexte et Art Antérieur

Plusieurs solutions techniques existent déjà pour mettre en œuvre un dispositif de pompe à chaleur dans le contexte d'une chaudière.

Tout d'abord, on connaît l'utilisation de compresseurs électriques pour compresser et faire circuler un fluide de travail caloporteur. On parle aussi de 'PAC électrique'.

On connaît aussi des pompes à chaleur à moteur au gaz ('PAC à moteur gaz'). Ce système implique l'utilisation d'un moteur à combustion interne qui s'avère bruyant et qui requiert une maintenance régulière.

On connaît aussi des pompes à chaleur à gaz à désorption/adsorption, comme par exemple celles utilisant un couple eau/ammoniac ou eau/zéolite. Mais ces dispositifs sont complexes et couteux ; de plus ils utilisent des matériaux potentiellement polluants ou nocifs.

En outre, d'une façon générale, il est préférable que ce type de chaudière soit être adaptable en puissance et soit aussi prévue pour pouvoir fournir l'eau chaude sanitaire (dit 'ECS') à la demande.

De plus, d'une façon générale, il est bien connu que les performances de la boucle pompe à chaleur diminuent sensiblement lorsque la température extérieure est faible, en particulier en aérothermie, notamment en dessous de 0°C, et le prélèvement des calories à l'extérieur devient quasiment négligeable voire nul par des températures extérieures inférieures à -10°C.

C'est la raison pour laquelle moultes chaudières sont équipées d'un brûleur d'appoint (ou 'de relève'), distinct du compresseur de la pompe à chaleur, qui délivre des calories dans le circuit de chauffage, comme par exemple enseigné par le document WO2014083440. Ces chaudières sont donc appelées 'hybrides' car elles combinent un circuit de pompe à chaleur et un brûleur classique de relève. Toutefois, ces chaudières 'hybrides' sont relativement complexes et couteuses.

Compte tenu de ce contexte, il subsiste donc un besoin de proposer des solutions plus optimisées pour les systèmes de chaudière thermodynamique à effet de pompe à chaleur.

A cet effet, il est proposé un système de chauffage comprenant un circuit de chauffage (30) et une chaudière thermodynamique configurée pour délivrer des calories dans ledit au moins un circuit de chauffage (30), la chaudière comprenant au moins un compresseur (M1) formant la fonction compression d'une boucle de type pompe à chaleur (31,34) utilisant un fluide frigorigène, la chaudière comprenant en outre un brûleur (11) de combustible qui délivre des calories au moins dans le fluide frigorigène, le brûleur de combustible délivrant les calories dans le fluide frigorigène, en aval du compresseur.

Grâce à ces dispositions, on délivre les calories « d'appoint » ou « de relève » dans le circuit de fluide frigorigène, ce qui simplifie l'architecture de la chaudière et permet d'utiliser préférentiellement **un seul échangeur avec le circuit de chauffage** pour la fonction PAC et la fonction 'relève'.

Avantageusement, on choisit comme fluide frigorigène un fluide compressible de type **R744** (c'est-à-dire essentiellement du CO2).
Nota 1 : Dans la boucle de type pompe à chaleur susmentionnée à fluide compressible de type **R744,** on met à profit un phénomène d'évaporation sur un échangeur et un phénomène de refroidissement/condensation sur un autre échangeur. Il faut noter que selon la présente invention, on peut aussi bien utiliser tout type de fluide frigorigène ayant des propriétés physiques voisines de celle du R744.
Nota 2 : À propos du vocabulaire employé dans le présent document, il faut noter que ce qui est appelé ici *'circuit de chauffage'* doit être interprété largement comme un circuit d'échange principal de calories avec une entité d'intérêt, le plus souvent un local, l'objectif étant de réchauffer le local, mais dans certains, notamment lorsque la pompe à chaleur est réversible, le système peut servir à rafraichir le local.

Dans divers modes de réalisation de l'invention, on peut éventuellement avoir recours en outre à l'une et/ou à l'autre des dispositions suivantes.

Selon un aspect de l'invention, le compresseur est un compresseur thermique comprenant au moins un étage de compression avec piston à déplacement alternatif, le brûleur de combustible formant en outre la source chaude du compresseur et le circuit de chauffage formant la source froide du compresseur. Dans ces conditions, du point de vue efficacité thermique, toute l'énergie développée au brûleur est soit utilisée directement pour la compression, soit diffusée directement dans le fluide compressible, et une partie sous forme de fumées pouvant être diffusée dans le circuit de chauffage.

Selon un aspect de l'invention, la chaudière thermodynamique comprend un circuit d'eau chaude sanitaire. Avantageusement, on peut délivrer une puissance suffisante pour avoir une disponibilité quasi instantanée de l'eau chaude sanitaire, sans nécessité d'un ballon de stockage de taille conséquente.

Selon un aspect de l'invention, le brûleur du compresseur forme l'unique brûleur de la chaudière. Moyennant quoi, avec cet unique brûleur, on est capable de répondre aux besoins énergétiques y compris les besoins pic en pointe (tirage d'eau chaude sanitaire, mise en température d'une habitation secondaire).

Selon un aspect, la chaudière thermodynamique comprend un circuit de surchauffe (38) du fluide compressible qui circule dans le brûleur du compresseur, et une vanne de régulation d'appoint (75) permettant de faire circuler une partie contrôlée du fluide compressible dans ledit circuit de surchauffe ; moyennant quoi la chaudière peut fonctionner avec appoint modulé ou sans appoint selon la position de la vanne de régulation d'appoint. De plus la puissance d'appoint est avantageusement modulable selon la quantité de gaz injecté dans le brûleur et le taux d'ouverture de la vanne de régulation d'appoint.

Selon un aspect, le brûleur du compresseur permet de délivrer la totalité de la puissance de la chaudière et présente de préférence une puissance comprise entre 20 et 25kW. Cette puissance s'avère suffisante pour une maison individuelle type avec par exemple 100 m² et 4/6 personnes.

Selon un aspect, la chaudière thermodynamique peut comprendre un échangeur (5) formant l'interface thermique essentielle entre la boucle de type pompe à chaleur (31) et le circuit de chauffage (30), l'échangeur comprenant un échangeur haute température (50) et un échangeur basse température (51), l'échangeur haute température étant couplé au circuit d'eau chaude sanitaire; ce qui permet d'avoir de l'eau chaude sanitaire produite à température élevée, à disposition quasi immédiate.

Selon un aspect, la boucle de type pompe à chaleur peut comprendre deux circuits disposés en cascade, à savoir un circuit de travail de gaz compressible R744 (31,M1,5,7,6) et un circuit d'eau glycolée (34,4,6). De sorte que le circuit de CO2 peut être confiné à l'intérieur de la chaudière, sans nécessité d'intervention sur le circuit CO2 par le plombier installateur sur le site final.

Selon un aspect, il peut être prévu une unité de modulation et un moteur (17) pour réguler, à savoir augmenter et/ou diminuer la vitesse de rotation du compresseur ; on peut ainsi adapter le régime de rotation du compresseur en temps réel au besoin en chauffage et en eau chaude sanitaire.

Selon un aspect, le compresseur peut comprendre au moins deux étages de compression en série, à savoir un deuxième étage de compression (U2). Moyennant quoi on peut utiliser le fluide de type CO2 (R744) avec une grande excursion en pressions et des températures de fluide CO2 adaptées en fonction des températures des circuits d'eau à chauffer. On obtient donc une bonne efficacité thermodynamique globale.

Selon un aspect, le compresseur peut comprendre 3 étages ; Moyennant quoi on optimise l'étagement des montées en pression et l'adéquation des températures de fluide CO2 adaptées en fonction des températures des circuits d'eau à chauffer et de la puissance thermique à délivrer.

Selon un aspect, les étages sont avantageusement indépendants. Ceci facilite le dimensionnement et on augmente les possibilités de modulation de chaque étage.

Selon un aspect, le compresseur peut comprendre au moins deux étages de compression en parallèle. Ceci représente une configuration alternative à la configuration en série.

Selon un aspect, la chaudière thermodynamique peut comprendre un préchauffeur d'air (9) à l'entrée du premier brûleur. Ainsi, on récupère des calories dans les fumées de combustion et on les injecte dans l'air à destination du brûleur ; ce qui améliore le coefficient de performance global.

Selon une configuration, dite de chauffage, la chaudière thermodynamique fournit des calories au circuit de chauffage (mode 'chauffage' ou 'hiver'), et la boucle de type pompe à chaleur réversible prélève des calories dans une unité extérieure.

Selon une autre configuration, dite de climatisation, la chaudière thermodynamique prélève des calories dans le circuit de chauffage 30, et délivre ces calories soit dans le circuit d'eau chaude sanitaire ECS soit dans l'unité extérieure 4 (mode été) ; ainsi la chaudière peut fournir une fonction climatisation, et en outre de l'eau chaude sanitaire gratuite énergétiquement.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 représente schématiquement un système de chauffage comprenant une chaudière selon l'invention,
- la figure 2 représente un système analogue à la figure 1, la chaudière comprenant un compresseur thermique,
- la figure 3 représente un système analogue à la figure 2, dans lequel l'appoint est délivré directement dans la partie chaude du compresseur thermique,
- la figure 4 représente schématiquement un étage du compresseur thermique,
- la figure 5 illustre un diagramme puissance vs température,
- la figure 6 représente plus en détail un étage du compresseur thermique,
- la figure 7 illustre le cycle thermodynamique,
- la figure 8 illustre la configuration à trois étages du compresseur thermique,
- la figure 9 représente schématiquement un diagramme du système de régulation,
- la figure 10 illustre la réversibilité de la boucle de pompe à chaleur.

Sur les différentes figures, les mêmes références désignent des éléments identiques ou similaires.

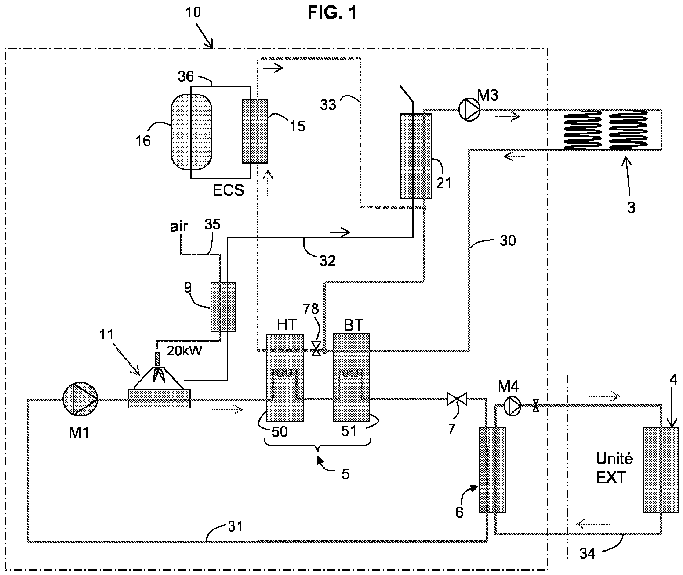

La figure 1 montre une vue d'ensemble d'un système de chauffage typiquement prévu pour chauffer un local industriel, une habitation individuelle ou collective. Le système de chauffage comporte une chaudière **10** qui sera décrite dans la suite.

Le système comprend un circuit de chauffage repéré **30 ;** comme annoncé au début, le terme « *circuit de chauffage* » n'exclut pas que ce circuit prélève des calories, toutefois dans le premier exemple tel qu'illustré, le circuit de chauffage comprend des entités réceptrices de calories **3** sous forme des radiateurs/convecteurs **3** et/ou d'un plancher chauffant, situés dans les pièces du local à chauffer.

Il peut y avoir plusieurs entités réceptrices de calories, par exemple une à basse température (plancher chauffant) et une autre à plus haute température (convecteurs, eau chaude sanitaire). Un circulateur **M3** fait circuler de l'eau dans le circuit de chauffage **30.**

Le cas où une entité réceptrice de calories est une piscine ou une serre peut être aussi traité. De même le système de chauffage peut être utilisé dans un contexte industriel avec l'entité réceptrice de calories sous forme d'un équipement de procédé industriel.

Il est prévu une production d'eau chaude sanitaire ('ECS') avec un ballon de réserve **16** d'eau chaude sanitaire comme connu en soi donc non décrit en détail ici. L'eau de ce ballon de réserve est chauffée par une circulation du fluide **36** lors de son passage dans un échangeur ECS **15.**

Avantageusement dans le cadre de la présente invention, le volume du ballon **16** de réserve peut être très faible par exemple 5 litres, en général inférieur à 10 litres.

Dans cet échangeur ECS **15** circule une branche de dérivation **33** du circuit de chauffage **30.** Cette branche de dérivation prélève des calories dans un échangeur haute température (HT) repéré **50** et les transmet à l'eau chaude sanitaire via l'échangeur ECS **15.**

Le débit de fluide qui circule dans la branche de dérivation **33** peut être commandé par une vanne de régulation ECS **78** connue en soi. Ce débit est déterminé en proportion des besoins du système de régulation du ballon de réserve d'eau chaude sanitaire.

La chaudière **10** comprend un compresseur **M1** qui constitue le composant moteur d'un circuit de pompe à chaleur. Dans l'exemple illustré, seule l'unité extérieure repérée **4** est agencée à l'extérieur du local (bâtiment, habitation, etc) le reste des composants principaux est agencé à l'intérieur du local, voire même dans l'enveloppe de la chaudière **10.**

On note qu'aux figures, les tuyauteries sont représentées de façon symbolique.

Le dispositif de pompe à chaleur comprend d'une part un circuit d'eau glycolée **34** qui circule dans l'unité extérieure **4,** et un circuit **31** de fluide de travail lequel passe au travers du compresseur **M1.** Dans l'exemple illustré, le fluide de travail est du R744 autrement dit du CO2, mais un autre fluide aux propriétés similaires pourrait être choisi. Afin de le distinguer des autres fluides, on appellera dans la suite le fluide de travail du circuit **31** le fluide « *compressible* » (aussi appelé dans l'art fluide 'frigorigène'). Ceci par opposition au fluide qui circule vers l'extérieur dans l'unité extérieure (circuit **34**) qui est principalement à base d'eau (eau glycolée), et aussi par opposition au fluide qui circule dans le circuit de chauffage **30** déjà mentionné qui est également principalement à base d'eau, donc non compressible.

Les différents fluides utilisés dans les circuits **30,31,34** sont des fluides caloporteurs, qu'ils soient compressibles ou non, ils permettent de transférer des calories principalement depuis l'unité extérieure **4** vers les entités réceptrices **3,** mais aussi depuis le brûleur **11** vers les entités réceptrices **3.**

Le mode de climatisation, aussi possible, sera décrit plus loin.

Il faut noter que l'unité extérieure **4** peut être une unité aérothermique ou géothermique.

On remarque que le captage des calories extérieures par l'effet de pompe à chaleur fait appel à deux circuits de fluide en série qui sont interfacés par l'échangeur **6** appelé échangeur d'interface **6,** échangeur de préférence à flux croisés. Le circuit d'eau glycolée **34** comprend un circulateur **M4,** récupère des calories sur l'unité extérieure **4** et délivre ces calories sur l'échangeur d'interface **6.** On remarque que l'ensemble du circuit de fluide compressible **31,** à savoir celui du CO2, se trouve confiné à l'intérieur de la chaudière **10** ce qui est préparé en usine de fabrication ; seul le circuit d'eau glycolée **34** doit être mis en œuvre par un professionnel sur l'installation cible.

En outre, le dispositif de pompe à chaleur comprend un détendeur **7,** connu en soi, qui joue le rôle inverse du compresseur pour la pression, et un échangeur **5** qui couple thermiquement le circuit du fluide compressible 31 en sortie de compresseur avec le circuit de chauffage **30.**

L'échangeur **5** comprend ici deux échangeurs agencés en série sur le circuit 31 de CO2 : l'échangeur dit «haute température HT » **50** dans lequel circule la dérivation **33** configurée pour réchauffer l'eau chaude sanitaire, et l'échangeur dit « basse température BT » **51** qui forme le couplage principal du circuit de CO2 **31** avec le circuit de chauffage **30.**

L'échangeur principal **5** pourrait aussi former un seul échangeur avec une première portion couplée au circuit d'eau chaude sanitaire **33** et une seconde portion couplée au circuit de chauffage **30.**

Le circuit de fluide compressible **31** contient du fluide sous forme diphasique qui récupère des calories sur l'échangeur d'interface **6** (côté dit 'évaporateur' où le fluide diphasique passe de l'état liquide à l'état vapeur) et délivre ces calories sur l'échangeur principal **5** (côté dit 'condenseur' où le fluide diphasique se refroidit). Le fluide compressible se refroidit dans l'échangeur **5,** mais reste essentiellement en phase vapeur ; c'est en subissant une détente au niveau du détendeur **7** qu'il passe essentiellement en phase liquide.

Dans la configuration de la figure 1, le compresseur **M1** peut être un compresseur à moteur électrique ; dans ce cas, on prévoit en aval du compresseur un brûleur d'appoint **11** qui vient délivrer des calories directement dans le fluide compressible, en aval du compresseur, avec une puissance modulée en adéquation avec la demande d'énergie sur le circuit de chauffage et/ou sur le circuit d'eau chaude sanitaire.

On remarque que les calories de relève sont délivrées dans le fluide compressible et non pas dans un échangeur directement couplé au circuit de chauffage.

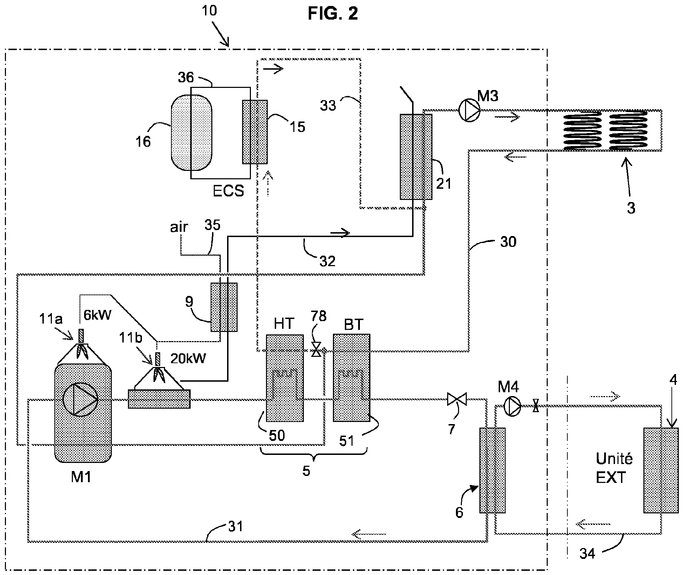

Dans la configuration de la figure 2, le compresseur **M1** peut être un compresseur de type mû par un moteur à gaz. Le moteur à gaz utilise un brûleur repéré **11a.** Le moteur à gaz entraîne ledit compresseur **M1** et un autre brûleur **11b** forme l'appoint calorifique sur le circuit du fluide compressible comme dans le cas précédent, c'est-à-dire en aval du compresseur M1.

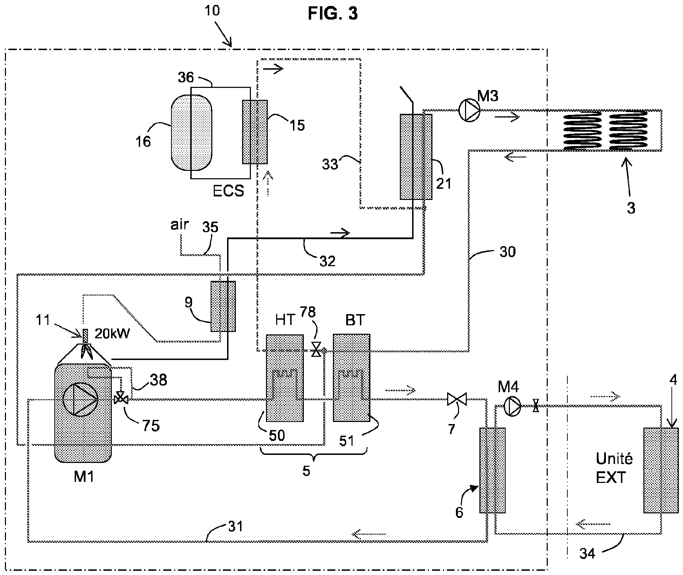

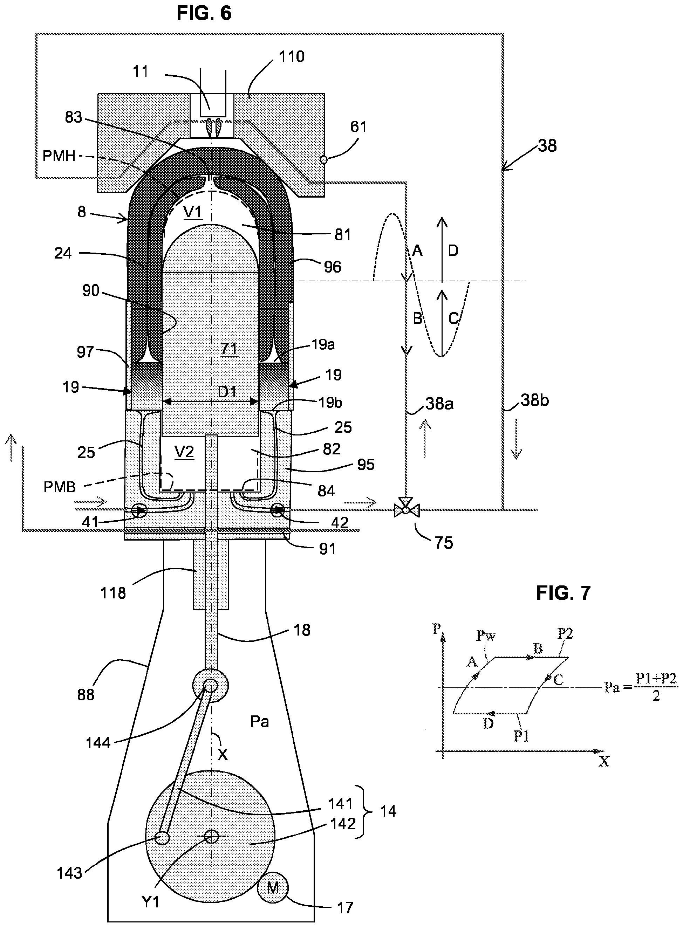

Dans la configuration de la figure 3, le compresseur **M1** est un compresseur thermique, c'est-à-dire il utilise une énergie calorifique comme source chaude et une source froide ceci pour mettre en action un piston dont le mouvement alternatif et l'utilisation de clapets anti retour forment le compresseur. Un exemple de ce type de compresseur thermique est enseigné en détail dans le document WO2014202885 et à la Fig 6 du présent document.

Dans la configuration de la figure 3, il n'y a qu'un seul et unique brûleur **11** qui forme à la fois la source chaude du compresseur thermique M1 et l'appoint calorifique, car en effet avantageusement, à la sortie de l'étage de compression, le fluide compressible R744 est dirigé vers l'environnement brûleur du compresseur et vient y circuler pour prélever des calories du brûleur (sans compression complémentaire à cet endroit). Sur les Figures 3,4,6,8, ce circuit de circulation dans la section chaude du compresseur est repéré **38.** Il est aussi appelé dans la suite de ce document « circuit de surchauffe » **38.** Le circuit de surchauffe 38 comprend une première portion aussi appelée portion amont **38a** et une seconde portion aussi appelée portion aval **38b.**

On remarque que la circulation dans la section chaude du compresseur est conditionnée par une vanne de régulation d'appoint **75** qui présente un taux d'ouverture quelconque entre deux positions, une première position extrême dans laquelle tout le CO2 est dirigé vers la section chaude du compresseur (cas du besoin d'appoint), et une deuxième position extrême (tout fermé) dans laquelle tout le CO2 est dirigé directement vers l'échangeur principal **5** avec le circuit de chauffage, sans repasser dans la section chaude du compresseur.

On remarque que lorsque le compresseur **M1** fonctionne et le la vanne de sélection **75** est dans la position tout fermé, il se trouve du fluide de travail qui stagne dans le circuit de surchauffe **38,** à l'endroit duquel sa température augmente jusqu'à une température voisine de la température du brûleur, à savoir typiquement entre 600°C et 700°C (cf plus loin). Toutefois, en raison des propriétés physiques du fluide choisi, c'est-à-dire le CO2, il n'y a pas de risque de forte surpression voire d'explosion.

Lorsque le compresseur fonctionne et que la vanne de sélection est dans la première position, dans la partie aval **38b** du circuit de recirculation, la température du fluide compressible CO2 est comprise entre 100°C et 300°C et ceci suivant la puissance d'appoint fourni au brûleur.

Dans la configuration de la figure 3, la puissance délivrée au brûleur unique 11 peut être modulée entre 0 et 20kW. Lorsque le compresseur fonctionne sans appoint nécessaire, la puissance délivrée se trouve particulièrement entre 3 et 6kW. Lorsque l'appoint est nécessaire, le compresseur fonctionne (représentant 3 à 6kW) et le reste de la puissance (représentant 2 à 15kW) est apportée depuis le brûleur directement au fluide de travail qui recircule dans le circuit de surchauffe **38.**

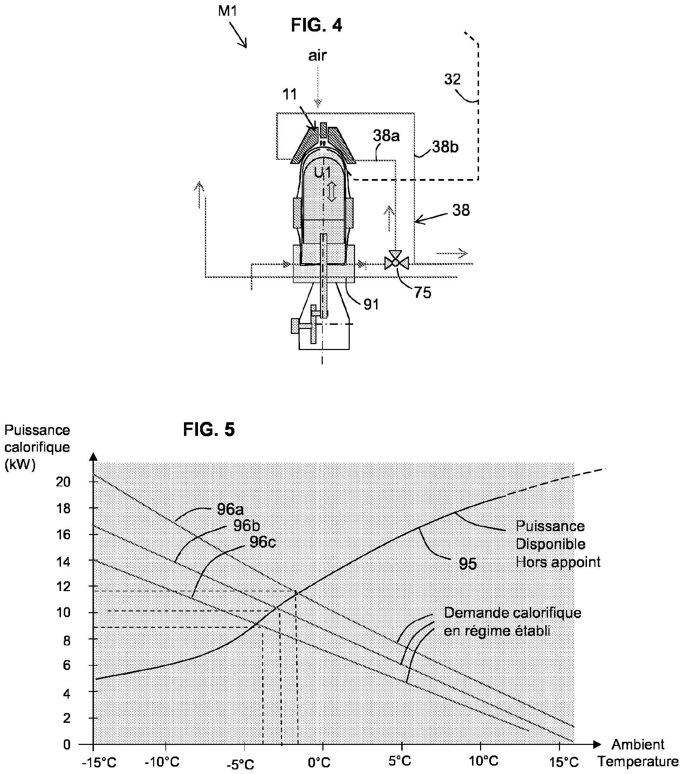

Le bilan des puissances mises en jeu est illustré à la Figure 5. La courbe repérée **55** « puissance disponible hors appoint » représente la somme de la puissance fournie par le compresseur et du prélèvement gratuit d'énergie dans l'environnement extérieur. Les courbes **56a 56b 56c** représentent le besoin de chauffage de trois types d'habitation en régime établi.

Le besoin d'appoint se fait sentir lorsque la température extérieure est dans la zone inférieure à un seuil autour de -5° à 0°C.

En outre, ce diagramme ne représente pas les besoins pic, tels que la production d'eau chaude sanitaire qui dépend du nombre de personnes utilisant les équipements de douche, toilette, cuisine, etc. Ce diagramme ne représente pas non plus le besoin pic de remise en température d'une habitation occupée occasionnellement.

Dans la configuration des figures 2 et 3, on remarque que le retour du circuit de chauffage **30** passe d'abord au travers de l'échangeur principal **5,51** puis est dirigé vers la zone froide du compresseur à l'endroit duquel le fluide du circuit de chauffage refroidit le compresseur **M1.**

On peut prévoir, dans toutes les configurations, que le circuit de sortie des gaz brûlés (noté **32**) du brûleur **11** passe à l'intérieur d'un échangeur **21** couplé avec le circuit de chauffage, à l'endroit duquel les fumées (issues de la combustion) cèdent leurs calories au fluide du circuit principal de chauffage **30.**

D'autre part, on peut prévoir, dans toutes les configurations, un échangeur de préchauffage d'admission d'air, repéré 9, par lequel on met à profit des calories présentes dans la sortie des gaz sortant du brûleur 11 pour préchauffer l'air frais **35** admis vers la flamme du brûleur. L'échangeur de préchauffage **9** est ici un échangeur air/air, connu en soi, utilisé à flux croisés dans l'exemple illustré.

L'air qui arrive dans l'injecteur du brûleur 11 se trouve ainsi à une température comprise entre 100 °C et 200 °C.

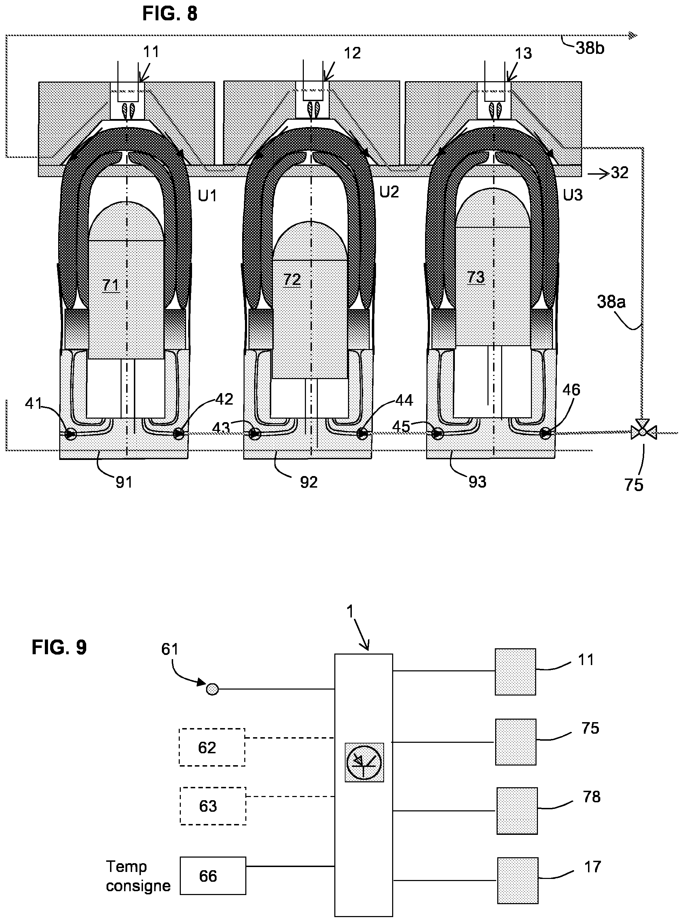

La quantité de gaz introduite et brûlée par le brûleur **11** est commandée par une unité de régulation **1** (cf. Fig. 9) qui contient au moins une boucle d'asservissement pour maintenir la température de la partie chaude du compresseur **M1** à une température cible (typiquement entre 600°C et 700°C). L'unité de régulation **1** pilote non seulement la quantité de gaz délivrée au brûleur 11 (avec pilotage de la richesse) mais aussi la vanne **78** de régulation ECS et aussi le cas échéant la vitesse de rotation du moteur de régulation **17** dont il sera question plus loin. En outre, pour gérer le besoin d'appoint de chauffage, l'unité de régulation pilote également la position de la vanne de sélection **75** qui active ou pas le circuit de surchauffe **38.**

Plus précisément, on prévoit un capteur de température **61** qui capte la température du carter **110** contenant le brûleur du compresseur (cf. Fig. 6). L'unité de régulation peut aussi recevoir diverses informations de température et de débit **62,63,** en provenance du circuit d'eau chaude sanitaire, du thermostat général de régulation du chauffage dans l'habitation sur lequel l'utilisateur indique la température de consigne **66,** etc.

La régulation fait intervenir, selon les configurations et les températures courantes, des décisions tout ou rien (cyclage ON/OFF) et/ou des asservissements en continu sur le débit au brûleur, sur la vanne de régulation d'appoint 75 sur la vanne de régulation ECS 78.

Plus précisément s'agissant de la constitution du compresseur **M1,** en référence à la figure 6, il s'agit d'un compresseur thermique dit 'régénératif' avec une zone d'apport de calories (zone chaude) une zone de refroidissement (zone froide), une enceinte fermée **8** qui communique avec l'extérieur grâce à 2 clapets anti-retour, à savoir un clapet d'entrée **41** (admission) et un clapet de sortie **42** (refoulement).

Dans l'exemple des Figures 4 et 6, il n'y a qu'un seul étage de compression noté **U1,** alors que dans l'exemple de la Figure 8, il s'agit d'une configuration à trois étages de compression autrement dit trois unités de compression **U1,U2,U3.**

Dans l'enceinte fermée **8,** le fluide compressible occupe un volume quasi constant, et un piston déplaceur **71** y est configuré pour se déplacer alternativement, de haut en bas dans l'exemple illustré, afin de déplacer l'essentiel du volume de fluide compressible vers la zone chaude ou vers la zone froide. Le piston est relié à un système d'embiellage et de vilebrequin d'entraînement dans un système d'auto entraînement qui sera vu plus loin.

Comme représenté à la Figure 6, le compresseur est architecturé autour d'une direction axiale **X,** qui est de préférence disposée verticalement, mais une autre disposition n'est pas exclue. Selon cet axe peut se déplacer le piston **71** monté mobile dans une chemise cylindrique **90.** Ledit piston sépare la première chambre **81** et la deuxième chambre **82,** ces deux chambres étant incluses dans l'enceinte de travail **8** avec la somme de leurs volumes **V1+V2** sensiblement constante. Le piston 71 présente une portion supérieure en forme de dôme, par exemple hémisphérique.

L'enceinte de travail **8** est contenue structurellement dans un assemblage formé d'un carter chaud **96** et d'une culasse froide **95,** avec interposition d'un anneau isolateur thermique **97.**

La première chambre **81,** dite aussi 'chambre chaude', est agencée au dessus du piston et couplée thermiquement à une source chaude **11** (un brûleur 11 de combustible) qui apporte des calories directement au fluide gazeux. La première chambre est de révolution avec une portion cylindrique de diamètre correspondant au diamètre **D1** du piston et une portion hémisphérique en partie supérieure, qui comprend une ouverture centrale **83** pour l'entrée et la sortie du fluide compressible. La source chaude **11** forme une calotte **110** agencée tout autour de la chambre chaude **81,** avec un injecteur de brûleur au centre.

La deuxième chambre **82,** dite aussi 'chambre froide', est agencée au dessous du piston et couplée thermiquement à une source froide (ici le retour du circuit de chauffage **91**) pour ainsi transférer des calories du fluide compressible vers le circuit de chauffage. La deuxième chambre est cylindrique, de diamètre **D1**, et comprend plusieurs ouvertures **84** disposées en cercle autour de l'axe, sous le piston, pour l'entrée et la sortie du fluide compressible.

Autour de la paroi de la chemise cylindrique **90** est agencé un échangeur régénérateur **19,** du type de ceux utilisés classiquement dans les machines thermodynamiques de type machine Stirling. Cet échangeur **19** (qu'on appellera aussi simplement *'régénérateur'* dans la suite) comprend des canaux fluides de faible section et des éléments de stockage d'énergie thermique et/ou un réseau serré de fils métalliques. Ce régénérateur **19** est agencé à une hauteur intermédiaire entre l'extrémité supérieure et l'extrémité inférieure de l'enceinte et présente un coté chaud **19a** vers le haut et un coté froid **19b** vers le bas.

À l'intérieur du régénérateur, on constate entre le côté chaud et le côté froid, un gradient de température important, le côté chaud ayant une température voisine de la température de la calotte du brûleur à savoir 700°C, le côté froid ayant une température voisine de la température du circuit de chauffage à savoir une température comprise entre 30°C et 70°C selon la ou les entité(s) présente(s) sur le circuit de chauffage.

Un interstice annulaire de circulation **24** agencé contre la surface interne du carter chaud **96** relie l'ouverture **83** de la première chambre jusqu'au côté chaud **19a** du régénérateur.

Des canaux **25** dans la culasse 95 relient les ouvertures **84** de la deuxième chambre jusque au côté froid **19b** du régénérateur.

Ainsi, lorsque le piston monte, le gaz compressible est chassé de la première chambre **81** par l'interstice de circulation **24,** le régénérateur **19** et les canaux **25** en direction de la deuxième chambre froide **82.** À l'inverse, lorsque le piston redescend, le gaz compressible est chassé de la deuxième chambre froide **82** par les canaux **25,** le régénérateur **19** et l'interstice de circulation **24,** en direction de la première chambre **81.**

Le fonctionnement du compresseur est assuré par le mouvement alternatif du piston **71** entre le point mort bas **PMB** et le point de haut **PMH,** ainsi que par l'action d'un clapet d'aspiration **41** sur l'entrée, d'un clapet anti-retour **42** de refoulement sur la sortie. Les différentes étapes A,B,C,D, décrites ci-après sont représentées sur les figures

### 6 et 7.

### Etape A.

Le piston, initialement en haut, se déplace vers le bas et le volume de la première chambre **81** augmente alors que volume de la deuxième chambre **82** diminue. De par le fait, le fluide est poussé au travers du régénérateur **19** du bas vers le haut, et se réchauffe au passage. La pression **Pw** augmente de façon concomitante.

### Etape B.

Lorsque la pression **Pw** dépasse une certaine valeur, le clapet de sortie **42** s'ouvre et la pression Pw s'établit à la pression **P2** de sortie du fluide compressé et du fluide est expulsé vers la sortie (le clapet d'entrée **41** reste bien sûr fermé pendant ce temps). Ceci se poursuit jusqu'au point mort bas du piston.

### Etape C.

Le piston, se déplace maintenant du bas vers le haut et le volume de la deuxième chambre augmente alors que première volume de la chambre diminue. De par le fait, le fluide est poussé au travers du régénérateur **19** du haut vers le bas, et se refroidit au passage. La pression **Pw** diminue de façon concomitante. Le clapet de sortie **42** se ferme en début de montée.

### Etape D.

Lorsque la pression **Pw** passe en dessous d'une certaine valeur, le clapet d'entrée **41** s'ouvre et la pression **Pw** s'établit à la pression **P1** d'entrée de fluide et du fluide est aspiré par l'entrée (le clapet de sortie **42** reste bien sûr fermé pendant ce temps). Ceci se poursuit jusqu'au point mort haut du piston. Le clapet d'entrée **41** se fermera dès le début de la descente du piston.

Les mouvements de la tige **18** sont commandés un dispositif d'auto-entrainement **14** agissant sur une extrémité de la tige. Ce dispositif d'auto-entrainement comprend un volant inertiel **142** monté à rotation autour d'un axe **Y1,** une bielle **141** reliée audit volant par une liaison pivot, par exemple un palier à roulement **143.** La bielle **141** est reliée à la tige par une autre liaison pivot, par exemple un palier à roulement **144.**

La chambre auxiliaire **88** remplie du fluide gazeux de travail à une pression notée **Pa.** Lorsque le dispositif est en fonctionnement, la pression **Pa** dans la chambre auxiliaire **88** converge vers une pression moyenne sensiblement égale à la demi-somme des pressions mini **P1** et maxi **P2.** En effet, en raison du jeu fonctionnel réduit entre la bague **118** et la tige **18,** en régime dynamique, cette très petite fuite ne nuit pas au fonctionnement et reste négligeable.

Lorsque le volant tourne d'un tour, le piston balaye un volume correspondant à la distance entre le point mort et point mort bas, multipliée par le diamètre **Dl.**

Le cycle thermodynamique, tel que représenté à la figure 7 fournit un travail positif au dispositif d'auto-entrainement.

Toutefois d'une part pour le démarrage initial et pour des besoins de régulation de vitesse de rotation, on prévoit un moteur **17** couplé au volant inertiel **142.**

Ce moteur peut être logé avantageusement dans la chambre auxiliaire **88** ou à l'extérieur avec un couplage magnétique à la paroi.

Le moteur **17** est piloté par une unité de régulation, non représentée aux figures ; la commande du moteur permet d'accélérer ou de ralentir la vitesse de rotation du volant inertiel, les flux thermiques échangés étant en relation quasi proportionnelle avec la vitesse de rotation du volant inertiel. Grâce au moteur **17,** l'unité de régulation peut ajuster la vitesse de rotation entre typiquement 100 trs/m et 500 trs/m, préférentiellement dans la gamme [200 - 300 trs/m].

On note également que le moteur 17 sert à faire démarrer le dispositif d'auto entraînement 14.

On remarque que le piston **71** n'est pas un piston récepteur de puissance (à l'inverse d'un moteur à combustion interne ou d'un moteur Stirling classique) mais simplement un piston déplaceur ; la puissance est fournie sous forme d'augmentation de pression de gaz de travail.

On note que **V1** + **V2** + **Vcanal = Vtotal** si on fait abstraction des variations du volume de la tige 18, **V1** étant le volume de la première chambre, **V2** étant le volume de la deuxième chambre et **Vcanal** étant le volume des canalisations **24,25** . De préférence on s'arrange pour avoir un volume mort de plus faible possible avec des canalisations de petite section, par exemple on obtiendra Vcanal < 10% de V1+V2.

On illustre à la figure 8 une caractéristique complémentaire, à savoir une configuration à trois étages de compression autrement dit trois unités de compression **U1,U2,U3**.

Le deuxième étage **U2** et le troisième étage **U3** sont similaires ou analogue en tout point au premier étage **Ul;** chacun comprend un brûleur **12,13** à l'endroit duquel la combustion de gaz mélangé à l'air admis se produit, et un piston déplaceur **72,73** analogues à celui du premier étage et dont le mouvement et la vitesse de rotation sont indépendants du premier.

Avantageusement, les étages fonctionnent de manière indépendante, la vitesse de rotation peut être différente d'un étage à l'autre.

On remarque que le circuit de chauffage refroidit les trois zones froides des compresseurs, par les canaux successifs **93, 92** et **91.**

La sortie du premier étage c'est-à-dire le clapet **42** est reliée à l'entrée du deuxième étage c'est-à-dire le clapet **43,** La sortie du deuxième étage c'est-à-dire le clapet **44** est reliée à l'entrée du troisième étage c'est-à-dire le clapet **45.** La sortie du clapet **46** forme la sortie générale du compresseur 1.

L'étagement des pressions peut être typiquement le suivant, la pression d'admission du premier étage **U1** est de l'ordre de 20 bars, la pression de refoulement du premier étage (admission deuxième étage) est de l'ordre de 40 bars ; la pression de refoulement du deuxième étage **U2** (admission troisième étage) est de l'ordre de 60bars ; la sortie du troisième étage **U3** peut être de l'ordre de 80 bars.

On peut prévoir que les trois zones froides des trois étages **U1 U2 U3** forment une seule pièce appelée culasse froide.

Bien entendu, on peut aussi avoir une configuration à deux étages **U1 U2.**

En outre, il est possible de prévoir une configuration dans laquelle deux étages (ou plus) sont disposés en parallèle, les étages étant similaires à ceux décrits ci-dessus.

D'une façon générale, on remarque que le combustible utilisé dans le brûleur peut être du gaz naturel, ou du bio gaz d'origine végétale ou animale, ou des composés hydrocarbures légers déchets de processus industriels pétroliers.

Hormis le cas de l'eau chaude sanitaire, un besoin de puissance important existe dans le cas d'une résidence secondaire qui doit être mise en température au moment de l'arrivée des occupants occasionnels. La configuration présentée permet de délivrer plus de 20 kW pendant un temps relativement long pour la mise en température du logement.

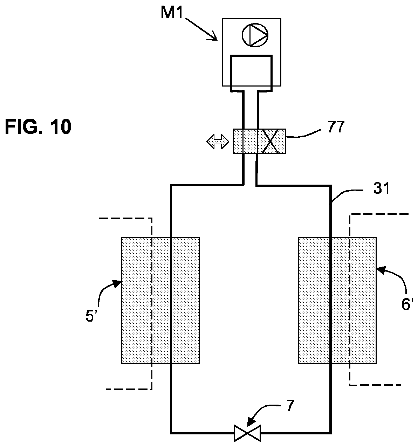

Comme illustré à la figure 10, le compresseur thermique **1** décrit ci-dessus peut être utilisé dans le contexte des schémas des figures 1 à 3, bien sûr dans un mode de chauffage, mais aussi moyennant sa réversibilité dans un dit de climatisation.

En l'occurrence, dans ce mode climatisation, on va prélever des calories sur le circuit de chauffage **30** (par exemple au niveau d'un plancher chauffant) et les calories prélevées vont être dirigées soient vers le circuit d'eau chaude sanitaire **15,16,** soit vers l'unité extérieure **4.**

Ce résultat peut être obtenu en inversant le rôle des échangeurs **5',6'** d'évaporation et de condensation sur la boucle du gaz compressible **31.**

Pour des raisons de clarté la vanne **77** à quatre voies qui permet d'inverser le sens de circulation du fluide n'a pas été représentée sur les figures 1 à 3, mais le principe est représenté à la figure 10 où la vanne **77** à quatre voies présente une position normale dite de mode de chauffage et une position spéciale (inversée) dite de mode de climatisation, qui inverse les rôles des échangeurs repérés 5' et **6'** comme connu en soi.

Dans le système de la chaudière, pour des raisons de clarté, certains composants n'ont pas été représentés bien qu'ils puissent être également présents. Il s'agit notamment de :
- les vases d'expansion sur des circuits d'eau 34, 30
- les robinets de remplissage et de purge du circuit de chauffage
- les robinets de remplissage et de purge du circuit CO2
- divers manomètres et capteurs de température nécessaires au pilotage du système par l'unité de régulation

### Récapitulatif des circuits

30 : circuit de chauffage
31 : fluide compressible CO2
32 : fumées de combustion
33 : dérivation pour ECS
34 : eau glycolée (échange avec l'extérieur)
35 : air admis réchauffé
36 : circuit spécifique ECS

## Revendications

1. Système de chauffage comprenant un circuit de chauffage (30) et une chaudière thermodynamique configurée pour au moins délivrer des calories dans ledit au moins un circuit de chauffage (30), la chaudière comprenant au moins un compresseur (M1) formant la fonction compression d'une boucle de type pompe à chaleur (31,34) utilisant un fluide frigorigène, la chaudière comprenant en outre un brûleur (11) de combustible qui délivre des calories au moins dans le fluide frigorigène, **caractérisée en ce que** le brûleur de combustible délivre les calories dans le fluide frigorigène, en aval du compresseur.

2. Système de chauffage selon la revendication 1, dans lequel le fluide frigorigène est un fluide compressible de type R744 (CO2).

3. Système de chauffage selon l'une des revendications 1 à 2, dans lequel le compresseur est un compresseur thermique comprenant au moins un étage de compression avec piston (71) à déplacement alternatif, le brûleur (11,11a) de combustible formant en outre la source chaude du compresseur et le circuit de chauffage formant la source froide du compresseur.

4. Système de chauffage selon la revendication 3, comprenant un circuit d'eau chaude sanitaire (15,16).

5. Système de chauffage selon l'une des revendications 3 à 4, dans lequel le brûleur (11) du compresseur forme l'unique brûleur de la chaudière.

6. Système de chauffage selon l'une des revendications 3 à 5, comprenant un circuit de surchauffe (38) du fluide compressible dans ou au voisinage immédiat du brûleur, et une vanne de régulation d'appoint (75) permettant de faire sélectivement circuler le fluide compressible dans ledit circuit de surchauffe.

7. Système de chauffage selon l'une des revendications 3 à 6, dans lequel le brûleur (11) du compresseur permet de délivrer la totalité de la puissance de la chaudière.

8. Système de chauffage selon l'une des revendications 4 ou l'une des revendications 5 à 7 lorsqu'elles dépendent de la revendication 4, comprenant un échangeur (5) formant l'interface thermique essentielle entre la boucle de type pompe à chaleur (31) et le circuit de chauffage (30), l'échangeur (5) comprenant un échangeur haute température (50) et un échangeur basse température (51), l'échangeur haute température étant couplé au circuit d'eau chaude sanitaire (15,16),

9. Système de chauffage selon l'une des revendications 3 à 8, dans lequel la boucle de type pompe à chaleur comprend deux circuits disposés en cascade, à savoir un circuit de travail de gaz compressible R744 (31,M1,5,7,6) et un circuit d'eau glycolée (34,4,6).

10. Système de chauffage selon l'une des revendications 3 à 9, dans lequel il est prévu une unité de modulation et un moteur (17) pour réguler, à savoir augmenter et/ou diminuer la vitesse de rotation du compresseur.

11. Système de chauffage selon l'une des revendications 3 à 10, dans lequel le compresseur comprend au moins deux étages de compression en série, à savoir un premier étage de compression (U1) et un deuxième étage de compression (U2).

12. Système de chauffage selon la revendication 11, dans lequel le compresseur comprend trois étages (U1,U2,U3).

## Patentansprüche

1. Heizsystem, beinhaltend einen Heizkreislauf (30) und einen thermodynamischen Kessel, der dazu konfiguriert ist, dem mindestens einen Heizkreislauf (30) mindestens Wärmeeinheiten zuzuführen, wobei der Kessel mindestens einen Kompressor (M1) beinhaltet, der die Kompressionsfunktion eines Kreises vom Typ Wärmepumpe (31, 34), der ein Kältefluid verwendet, bildet, wobei der Kessel ferner einen Brennstoffbrenner (11) beinhaltet, der mindestens dem Kältefluid Wärmeeinheiten zuführt, **dadurch gekennzeichnet, dass** der Brennstoffbrenner dem Kältefluid stromabwärts des Kompressors Wärmeeinheiten zuführt.

2. Heizsystem nach Anspruch 1, wobei das Kältefluid ein komprimierbares Fluid vom Typ R744 (CO2) ist.

3. Heizsystem nach einem der Ansprüche 1 bis 2, wobei der Kompressor ein thermischer Kompressor ist, der mindestens eine Kompressionsstufe mit einem hin- und hergehenden Kolben (71) beinhaltet, wobei der Brennstoffbrenner (11, 11a) ferner die Wärmequelle des Kompressors und der Heizkreislauf die Kältequelle des Kompressors bildet.

4. Heizsystem nach Anspruch 3, beinhaltend einen Kreislauf mit Warmwasser für den häuslichen Gebrauch (15, 16).

5. Heizsystem nach einem der Ansprüche 3 bis 4, wobei der Brenner (11) des Kompressors den einzigen Brenner des Kessels bildet.

6. Heizsystem nach einem der Ansprüche 3 bis 5, beinhaltend einen Kreislauf zur Überhitzung (38) des komprimierbaren Fluids in dem oder in unmittelbarer Nähe des Brenners und ein Zusatzregelventil (75), das es gestattet, das komprimierbare Fluid selektiv in dem Überhitzungskreislauf zirkulieren zu lassen.

7. Heizsystem nach einem der Ansprüche 3 bis 6, wobei der Brenner (11) des Kompressors es gestattet, die gesamte Leistung des Kessels zuzuführen.

8. Heizsystem nach einem der Ansprüche 4 oder einem der Ansprüche 5 bis 7, sofern sie von Anspruch 4 abhängen, beinhaltend einen Wärmetauscher (5), der die essentielle thermische Schnittstelle zwischen dem Kreis vom Typ Wärmepumpe (31) und dem Heizkreislauf (30) bildet, wobei der Wärmetauscher (5) einen Hochtemperaturwärmetauscher (50) und einen Niedrigtemperaturwärmetauscher (51) beinhaltet, wobei der Hochtemperaturwärmetauscher mit dem Warmwasserkreislauf für den häuslichen Gebrauch (15, 16) gekoppelt ist.

9. Heizsystem nach einem der Ansprüche 3 bis 8, wobei der Kreis vom Typ Wärmepumpe zwei kaskadiert angeordnete Kreisläufe beinhaltet, nämlich einen Arbeitskreislauf für komprimierbares Gas R744 (31, M1, 5, 7, 6) und einen Wasser-Glykol-Kreislauf (34, 4, 6).

10. Heizsystem nach einem der Ansprüche 3 bis 9, wobei eine Modulationseinheit und ein Motor (17) vorgesehen sind, um die Drehzahl des Kompressors zu regeln, nämlich zu erhöhen und/oder zu verringern.

11. Heizsystem nach einem der Ansprüche 3 bis 10, wobei der Kompressor mindestens zwei Kompressionsstufen in Reihe beinhaltet, nämlich eine erste Kompressionsstufe (U1) und eine zweite Kompressionsstufe (U2).

12. Heizsystem nach Anspruch 11, wobei der Kompressor drei Stufen (U1, U2, U3) beinhaltet.

## Claims

1. Heating system comprising a heating circuit (30) and a thermodynamic boiler configured for at least delivering heat in said heating circuit (30), the boiler comprising at least one compressor (M1) forming the compression function of a heat pump type loop (31, 34) using a refrigerant, the boiler further comprising a fuel burner (11) which delivers heat at least into the refrigerant, **characterized in that** the fuel burner delivers the heat into the refrigerant, downstream of the compressor.

2. Heating system according to claim 1, wherein the refrigerant is a compressible fluid of type R744 (CO2).

3. Heating system according to one of claims 1 to 2, wherein the compressor is a heat compressor comprising at least one compression stage with reciprocating piston (71), the fuel burner (11,11 a) further forming the heat source of the compressor and the heating circuit forming the cold source of the compressor.

4. Heating system according to claim 3, comprising a domestic hot water circuit (15, 16).

5. Heating system according to one of claims 3 to 4, wherein the burner (11) of the compressor forms the only burner of the boiler.

6. Heating system according to one of claims 3 to 5, comprising a circuit (38) for superheating the compressible fluid in or in the immediate vicinity of the burner, and a booster control valve (75) for selectively allowing the compressible fluid to circulate in said superheating circuit.

7. Heating system according to one of claims 3 to 6, wherein the burner (11) of the compressor allows delivering all the power of the boiler.

8. Heating system according to one of claims 4 or one of claims 5 to 7 as dependent on claim 4, comprising an exchanger (5) forming the essential thermal interface between the compressible fluid circuit (31) and the heating circuit (30), the exchanger (5) comprising a high temperature exchanger (50) and a low temperature exchanger (51), the high temperature exchanger being coupled to the domestic hot water circuit (15, 16).

9. Heating system according to one of claims 3 to 8, wherein the heat pump type loop comprises two circuits in cascade, namely a working circuit of R744 compressible gas (31,M1,5,7,6) and a circuit of glycolated water (34,4,6).

10. Heating system according to one of claims 3 to 9, wherein a modulation unit is provided as well as a motor (17) for regulating, namely increasing and/or decreasing, the rotational speed of the compressor.

11. Heating system according to one of claims 3 to 10, wherein the compressor comprises at least two compression stages in series, namely a first compression stage (U1) and a second compression stage (U2).

12. Heating system according to claim 11, wherein he compressor comprises three stages (U1, U2, U3).
